# EUROPEAN PATENT SPECIFICATION

(11) **EP 4 458 465 B1**
(45) Date of publication and mention of the grant of the patent: **18.03.2026**
(21) Application number: 23752709.8
(22) Date of filing: 27.01.2023
(51) Int. Cl.: B01J 37/02, B01D 53/94, B01J 23/63

(54) **METHOD FOR PRODUCING EXHAUST GAS PURIFICATION CATALYST**
VERFAHREN ZUR HERSTELLUNG EINES ABGASREINIGUNGSKATALYSATORS
PROCÉDÉ DE PRODUCTION D'UN CATALYSEUR DE PURIFICATION DE GAZ D'ÉCHAPPEMENT

(30) Priority: 14.02.2022 JP 2022020422
(43) Date of publication of application: 06.11.2024
(73) Proprietor: CATALER CORPORATION, Kakegawa-shi, Shizuoka 437-1492 (JP)
(72) Inventor: YAMAMOTO, Keita, Kakegawa-shi, Shizuoka 437-1492 (JP); MATSUI, Suguru, Kakegawa-shi, Shizuoka 437-1492 (JP); OHARA, Etsuko, Kakegawa-shi, Shizuoka 437-1492 (JP)
(74) Representative: Kramer Barske Schmidtchen Patentanwälte PartG mbB
(86) International application number: PCT/JP2023/002728
(87) International publication number: WO 2023/153244

(56) References cited:
- WO-A1-2008/113801
- WO-A1-2010/114132
- WO-A1-2011/080525
- CN-A- 103 157 521
- CN-A- 105 521 896
- JP-A- 2012 148 280
- JP-A- 2020 099 837

## Description

### Technical Field

The present invention relates to a method for producing an exhaust gas purification catalyst provided in an exhaust system of an internal combustion engine of a vehicle.

### Background Art

So-called three-way catalysts (TWCs) are used as exhaust gas purification catalysts to remove exhaust gas components such as hydrocarbons (HC), carbon monoxide (CO), and nitrogen oxides (NOₓ) from exhaust gas exhausted from internal combustion engines such as vehicle engines through oxidation or reduction reaction.

In general, in a three-way catalyst, a catalyst coat layer including a porous support made of an inorganic oxide such as alumina (Al₂O₃) and zirconia (ZrO₂) and a metal (hereinafter also referred to as a "catalyst metal") that is supported on the porous support and functions as an oxidation catalyst and/or a reduction catalyst, such as palladium (Pd) and rhodium (Rh) is formed on a honeycomb base material made of cordierite or the like.

As an example of the method for producing an exhaust gas purification catalyst, known is a technique of supplying a slurry for forming a catalyst coat layer to an end surface of a honeycomb base material and drawing the slurry into the honeycomb base material by suction. For example, JP 2020-99837 A discloses a production technique including supplying a catalyst metal-containing solution to an upper portion of the honeycomb base material by a shower nozzle. In addition, JP 2012-148280 A discloses a technique of coating a base material with a suspension by suction and then performing re-suction to adjust the coating amount.

CN 103157521 A, CN 105521896 A, JP 2020-99837 A, and JP 2012-148280 A disclose further methods for producing exhaust gas purification catalysts.

### Summary of Invention

In an example of a production line for exhaust gas purification catalyst, a slurry supply step of supplying a slurry for forming a catalyst coat layer to the honeycomb base material by a shower nozzle and a suction step of sucking the honeycomb base material to which the slurry has been supplied to draw the slurry into the honeycomb base material are performed sequentially. Generally, the time required for the suction step is longer than the time required for the slurry supply step, so that there is a time (standby time) for which the supply of the slurry from the shower nozzle is stopped until the suction step is completed. When such a standby time is long, the slurry near outlets of the shower nozzle is dried out, resulting in clogging of the outlets. The clogging of the outlets of the shower nozzle causes non-uniform supply of the slurry to the base material, whereby the catalyst coat layer is prone to be formed non-uniformly.

The present invention was made in view of the circumstances described above, and is mainly intended to provide a method for producing an exhaust gas purification catalyst with a shorter standby time of the shower nozzle.

The present disclosure provides a method for producing multiple exhaust gas purification catalysts using a production line. The method for producing an exhaust gas purification catalyst disclosed herein includes the steps specified in claim 1.

With such a configuration, at least two suction steps can be performed by using multiple suction devices, thereby reducing the time required for one suction device to perform suction. This reduces the standby time of the shower nozzle and substantially prevents clogging of the outlets of the shower nozzle.

The configuration according to claim 1 further reduces the suction time per suction device and thus further reduce the standby time of the shower nozzle.

A preferred aspect of the exhaust gas purification catalyst disclosed herein may further include, after the suction steps, a drying step of drying the honeycomb base material.

Th configuration according to claim 1 reduces the standby time of the shower nozzle and substantially prevents clogging of the outlets of the shower nozzle.

Th configuration according to claim 1 substantially prevents clogging of the outlets of the shower nozzle in a more suitable manner.

In a preferred aspect of the method for producing an exhaust gas purification catalyst disclosed herein, suction times in the respective suction steps are all the same. When the suction times for the multiple suction steps are different from each other, the suction requiring the longest suction time becomes rate-limiting. Thus, with such a configuration, the standby time of the shower nozzle is further reduced.

In a preferred aspect of the exhaust gas purification catalyst disclosed herein, the honeycomb base material is a wall-flow type honeycomb base material. The wall-flow type honeycomb base material requires more suction time than the straight-flow type honeycomb base material, so that the standby time of the shower nozzle tends to be longer. However, this technology reduces the standby time of the shower nozzle. Thus, even when the wall-flow type honeycomb base material is used, productivity can be enhanced.

In a preferred aspect of the exhaust gas purification catalyst disclosed herein, the catalyst metal-containing slurry contains a catalyst metal functioning as a catalyst capable of oxidizing or reducing at least one exhaust gas component. This can produce an exhaust gas purification catalyst having a high exhaust gas purification performance.

### BRIEF DESCRIPTION OF DRAWINGS

[Fig. 1] Fig. 1 is a schematic perspective view of an example of a configuration of an exhaust gas purification catalyst.
[Fig. 2] Fig. 2 is a schematic view of an example configuration of a cross section of an exhaust gas purification catalyst along a cylinder axis direction.
[Fig. 3] Fig. 3 is a flowchart illustrating general steps of a method for producing an exhaust gas purification catalyst according to an embodiment.

### DESCRIPTION OF EMBODIMENTS

Some preferred embodiments of the technology disclosed herein will be described below with reference to the accompanying drawings. The matters necessary for executing the present technology, except for matters specifically herein referred to can be grasped as design matters of those skilled in the art based on the related art in the preset field. The present technology can be executed based on the contents disclosed herein and the technical knowledge in the present field. The expression "A to B (here A and B are any numerical values)" indicating herein a numerical range means "A or more to B or less," and also means "above A to less than B," "above A to B or less," and "A or more to less than B."

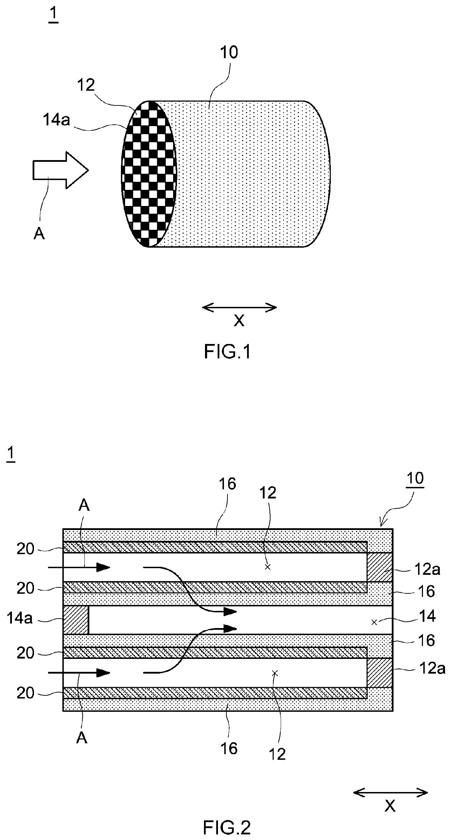

Next, an example of the configuration of the exhaust gas purification catalyst 1 provided by this technology will be described. Fig. 1 is a schematic view of a configuration of another embodiment of an exhaust gas purification catalyst. Fig. 2 is a schematic view of an example configuration of a cross section of an exhaust gas purification catalyst 1 along a cylinder axis direction X. In Figs. 1 and 2, the reference sign A represents an exhaust gas flowing direction. the reference sign X represents a cylinder axis direction of a base material.

As shown in Figs. 1 to 2, the exhaust gas purification catalyst 1 includes a base material 10 and a catalyst coat layer 20.

### <Base Material>

The base material 10 is a member that constitutes a framework of the exhaust gas purification catalyst 1. As the base material 10, various materials in various forms that have been used as base materials that constitute the exhaust gas purification catalyst can be employed. For example, ceramic base materials such as cordierite, aluminum titanate, and silicon carbide (SiC) with high heat resistance, or metal base materials such as stainless steel can be used.

The shape of the base material can be the same as those in the conventional exhaust gas purification catalysts. The shape of the base material is preferably a honeycomb structure. The honeycomb structure herein refers to a structure in which multiple cells that serve as flow paths for fluid (e.g., exhaust gas) are gathered. As an example, the base material 10 of the exhaust gas purification catalyst 1 shown in Fig. 1 has a honeycomb structure having a cylindrical outside shape and made of, for example, cordierite. The outside shape of the base material 10 may be other than the cylindrical shape, for example, an elliptic cylindrical shape or a polygonal cylindrical shape. The overall length and volume of the base material 10 are not particularly limited, and can be changed, as appropriate, according to the dimensions of the exhaust pipe into which the exhaust gas purification catalyst 1 is installed, the performance of the internal combustion engine from which exhaust gas is exhausted, and the like. The volume (volumetric capacity) of the base material 10 may be, for example, 0.5 L to 10L, or 0.9 L to 2.0 L.

As shown in Figs. 1 to 2, the exhaust gas purification catalyst 1 includes a so-called wall-flow type base material 10. Specifically, the base material 10 includes: inlet cells 12 each with an opening at an exhaust gas inlet end; outlet cells 14 each with an opening at an exhaust gas outlet end, and porous partitions 16 partitioning both the inlet cells 12 and the outlet cells 14. Specifically, the inlet cells 12 are each a gas flow path which is open at the exhaust gas inlet end and has an exhaust gas outlet end closed with a sealing portion 12a. The outlet cells 14 are each a gas flow path which has an exhaust gas outlet end closed with a sealing portion 14a and is open at the exhaust gas outlet end. The partition 16 is a partitioning material with multiple fine pores through which exhaust gas can pass. The partition 16 has multiple fine pores through which the inlet cell 12 and the outlet cell 14 communicate with each other. In the exhaust gas purification catalyst 1 shown in Fig. 2, the shape of each inlet cell 12 (outlet cell 14) in the cross section perpendicular to the cylinder axis direction X is square. However, the shape of the inlet cell (outlet cell) in the cross section is not limited to square, and various shapes can be employed. The shape may be, for example, any of various geometric shapes, namely a quadrilateral such as parallelogram, rectangle, trapezoid; other polygons (e.g., triangle, hexagonal, octagonal); and circular. Although not particularly limited thereto, the thickness of the partition 16 is, for example, 0.05 mm to 2 mm, preferably 0.1 mm to 1 mm.

The base material 10 is not limited to the wall-flow type, and can be, for example, a straight-flow type base material having multiple through holes as exhaust gas passages in the cylinder axis direction X of the base material 10.

### <Catalyst Coat Layer>

The catalyst coat layer 20 typically at least includes a catalyst metal that functions as a catalyst that can oxidize or reduce at least one exhaust gas component and an inorganic carrier that supports the catalyst metal. Examples of the catalyst metal include metals belonging to platinum group elements such as palladium (Pd), rhodium (Rh), and platinum (Pt) or other metals that function as oxidization catalysts or reduction catalysts. Pd and Pt have excellent purifying performance (oxidation purifying performance) for carbon monoxide and hydrocarbon, and Rh has excellent purifying performance (reduction purifying performance) for NOₓ. Thus, they are particularly preferable catalyst metals. In addition to these, metals such as barium (Ba), strontium (Sr), other alkaline earth metals, alkali metals, transition metals, and the like may be used as cocatalyst components. The mean particle diameter of the catalyst metal may be, for example, 0.5 nm to 50 nm, preferably 1 nm to 20 nm, but is not particularly limited.

The "mean particle diameter" herein is a cumulative 50% particle diameter (D50) in a number-based particle size distribution based on electron microscopy. Specifically, first, the electron microscope image of the catalyst coat layer is subjected to image analysis, equivalent circle diameters of 100 target particles observed are measured, and a number-based particle size distribution is created. Then, in the particle size distribution, the particle diameter at the cumulative 50% from the smallest particle diameter is regarded as the "mean particle diameter D50." The mean particle diameter herein is calculated to encompass the particle diameter of secondary particles formed by aggregation or sintering. In other words, when the mean particle diameter is calculated, the equivalent circle diameters of particles observed by the electron microscopy are measured without distinguishing between primary particles and secondary particles, and the mean particle diameter is measured based on the equivalent circle diameters of the particles measured.

The inorganic carrier that supports the catalyst metal is not particularly limited as long as it can carry the catalyst metal, and can be a carrier made of known inorganic compound particles. Examples of the carrier include inorganic compound particles (so-called an OSC material) having oxygen storage capacity (OSC) such as ceria (CeO₂) and a composite oxide (e.g., a ceria-zirconia composite oxide (CZ or ZC composite oxide)) containing ceria; and oxide particles such as alumina (Al₂O₃), titania (TiO₂), zirconia (ZrO₂), and silica (SiO₂). The carriers may be used alone or in combination of two or more of them. The OSC material may function as a cocatalyst for purification of exhaust gas, and thus, a carrier containing the OSC material is preferable. For example, the OSC materials such as ceria and a ceria-zirconia composite oxide, containing trace amounts of oxides that contain yttrium (Y), lanthanum (La), niobium (Nb), praseodymium (Pr), and other rare earth elements are suitable because they improve heat resistance.

The catalyst coat layer 20 may further contain components other than the catalyst metal components and the inorganic carrier, such as a binder, a cocatalyst component, and other additives. As the binder, aluminum sol, silica sol, or the like in the known catalyst coat layer of this type can be used. Examples of the cocatalyst component include metals such as Ba and Sr as described above. The content of the catalyst metal in the catalyst coat layer 20 is not particularly limited. For example, the content of the catalyst metal may be 0.01 mass% to 10 mass%, preferably 0.1 mass% to 5 mass% relative to the entire mass of the inorganic carrier contained in the catalyst coat layer 20.

In the exhaust gas purification catalyst 1 shown in Fig. 2, the catalyst coat layer 20 is formed inside the partition 16 (so-called in-wall). Specifically, the catalyst coat layer 20 is formed on the wall surface of each fine pore of the partition 16 in the predetermined region (thickness) from the surface of the partition 16 on the inlet cell 12 side toward the outlet cell 14 side. The thickness of the catalyst coat layer 20 is not particularly limited, and for example, the catalyst coat layer 20 may be formed over the entire thickness of the partition 16, or may be formed so that it is 80%, 60%, or 40% of the thickness of the partition 16. The catalyst coat layer 20 may be formed over the entire length of the partition 16 in the cylinder axis direction, or may be formed at a predetermined proportion from the end of the base material 10. For example, the catalyst coat layer 20 may be 100%, 80% or less, 60% or less, or 40% or less of the entire length of the partition 16 in the cylinder axis direction. The thickness and length of the catalyst coat layer 20 may be determined, as appropriate, according to the size of the inlet cells 12 and outlet cells 14 of the base material 10, the flow rate of the exhaust gas introduced into the exhaust gas passages, and the like.

Although not particularly limited thereto, the coating amount of the coat layer 20 per 1L of the base material 10 is, for example, 20 g/L or more, 30 g/L or more, or 50 g/L or more, in view of improving the exhaust gas purification performance. In view of reducing the pressure drop, the upper limit of the forming amount of the catalyst coat layer 20 is preferably 200 g/L or less, more preferably 150 g/L or less, yet more preferably 120 g/L or less. The volume of the base material 10 herein refers to a bulk volume including the volumes of voids such as inlet cells 12, outlet cells 14, and pores of partitions 16 in addition to the net volume of the base material 10.

The catalyst coat layer 20 is not limited to be formed inside the partition 16, but may be formed on the surface of the partition 16. The catalyst coat layer 20 is not limited to be formed on the inlet cell 12 side, but may be formed inside and/or on the surface of the partition 16 on the outlet cell 14 side. The catalyst coat layer 20 may be formed on both the inlet cell 12 side and the outlet cell 14 side of the partition 16.

The exhaust gas purification catalyst 1 can be used as a catalyst for purifying exhaust gas exhausted from various internal combustion engines. For example, the exhaust gas purification catalyst 1 can be used suitably as an exhaust gas purification catalyst for gasoline engines and diesel engines.

### <Method for Producing Exhaust Gas Purification Catalyst>

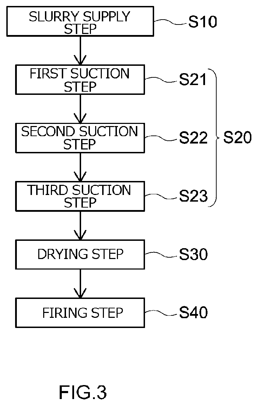

A method for producing an exhaust gas purification catalyst disclosed herein will be described below with reference to a suitable example. Fig. 3 is a flowchart illustrating general steps of a method for producing an exhaust gas purification catalyst according to an embodiment. The method for producing an exhaust gas purification catalyst disclosed herein includes: a slurry supply step S10 of supplying a slurry for forming a catalyst coat layer (catalyst metal-containing slurry) to a base material by using a shower nozzle; and a suction step S20 of performing suction multiple times (at least twice) on the base material to which the slurry has been supplied. The method for producing an exhaust gas purification catalyst disclosed herein may further include a drying step S30. The method for producing an exhaust gas purification catalyst disclosed herein may further include a firing step S40. The method for producing an exhaust gas purification catalyst disclosed herein may further include other steps at any stage.

In order to industrially produce multiple exhaust gas purification catalysts, a production line is used in which a slurry supply step performed by the shower nozzle and the suction step of sucking the base material to which the slurry has been supplied can be performed in sequence. Generally, one suction device used in the suction step is installed per production line. In such a production line, after the slurry is supplied to one base material with a shower nozzle, suction is performed by the single suction device. Then, in parallel with the suction of the base material, the slurry is supplied to another base material by a shower nozzle. However, especially when the volume of the base material is relatively large (e.g., 0.9 L or more), a catalyst coat layer is formed inside partitions of the wall-flow type base material, or the like, time required for suction is significantly longer than the time required for supply of the slurry by the shower nozzle. Thus, in the production line, the time when the suction step is ended becomes rate-limiting, and the time for which the slurry supply by the shower nozzle is stopped (standby time) becomes long. Accordingly, the slurry near the outlets of the shower nozzle is prone to be dried out, resulting in clogging of the outlets of the shower nozzle. The clogging of the outlets of the shower nozzle causes non-uniform supply of the slurry to the base material, whereby the catalyst coat layer is prone to be formed non-uniformly. Accordingly, quality reliability of the exhaust gas purification catalyst may decrease.

The method for producing an exhaust gas purification catalyst disclosed herein is characterized in that multiple suction devices are provided, and suction, which has been conventionally carried out with a single suction device, is divided. As a result of studies, the present inventor found as follows. When the step that requires X seconds to end suction with a single suction device is sequentially performed by using N suction devices (N is a natural number equal to or greater than 2), a catalyst coat layer equivalent to that in the case where the suction is performed by a single suction device can be formed within a total suction time of X seconds. The time for which the shower nozzle is stopped has been controlled as the suction by a single suction device for X seconds is ended. However in the present technology, for example, three suction devices are provided, and the time required for suction per each suction device is X/3 seconds assume that the suction times for the three suction devices are the same, thereby reducing the standby time of the shower nozzle. As a result, clogging of the outlets of the shower nozzle is substantially prevented, and the catalyst coat layer is prone to be formed uniformly, resulting in improvement of quality reliability and productivity of the exhaust gas purification catalyst. The wall-flow type honeycomb base material requires more suction time than the straight-flow type honeycomb base material, so that the standby time of the shower nozzle tends to be longer. However, this technology reduces the standby time of the shower nozzle. Thus, even when the wall-flow type honeycomb base material is used, productivity can be enhanced.

### <Slurry Supply Step S10>

In the slurry supply step S10, the catalyst metal-containing slurry is supplied to one end (end surface) of the base material by using a shower nozzle. The end (end surface) of the base material herein refers to an end (end surface) in the cylinder axis direction. As the base material, the same base material as that shown as an example of the base material 10 used in the exhaust gas purification catalyst 1 can be used, and a base material (honeycomb base material) having a honeycomb structure is preferably used. The shower nozzle used can be any of known shower nozzles used in this kind of technology without particular limitations. Typically, the shower nozzle has multiple outlets for discharging the slurry. An average pore diameter of the outlets of the shower nozzle is, for example, from 0.3 mm to 3 mm inclusive, or from 0.5 mm to 1.5 mm inclusive.

The supply time required for the shower nozzle to supply the catalyst metal-containing slurry needs to be changed, as appropriate, according to the coating amount of the catalyst coat layer formed, the size of the base material, and the like, and is not particularly limited. The supply time may be, for example, 2 seconds to 10 seconds.

The catalyst metal-containing slurry contains, for example, a catalyst metal, an inorganic carrier for carrying the catalyst metal, and a dispersion medium for dispersing them. The catalyst metal and the inorganic carrier may be the same as those shown as examples which may be contained in the catalyst coat layer 20 of the exhaust gas purification catalyst 1. The dispersion medium used may be any of dispersion media which has been used in this kind of slurry without particular limitations, and is preferably an aqueous dispersion medium such as water.

The catalyst metal-containing slurry may further contain a binder, a cocatalyst component, a thickener, a dispersant, and other additives. The binder and the cocatalyst component may be the same as those shown as examples which may be contained in the catalyst coat layer 20 of the exhaust gas purification catalyst 1. The thickener can be a water-soluble organic polymer.

The viscosity of the catalyst metal-containing slurry is not particularly limited, and is, for example from 1 mPa·s to 10000 mPa·s inclusive, from 5 mPa·s to 1000 mPa·s inclusive, from 10 mPa·s to 300 mPa·s inclusive. The viscosity may be performed by using an E-type viscometer (available from Toki Sangyo Co.,Ltd., TVE-35H) at a rotor type of 1°34' × R24 and a measurement temperature of 25°C. The viscosity herein refers to the viscosity measured at a shear velocity of 0.4 s⁻¹.

### <Suction Step S20>

The suction step S20 at least includes a first suction step S21 and a second suction step S22. The suction step S20 may further include, as the second suction step, one or more suction steps. In other words, the suction step S20 may include multiple suction steps including the first suction step to the N-th suction step (N is a natural number of 2 or more). In the present embodiment shown in Fig. 3, the suction step S20 includes a first suction step S21, a second suction step S22, and a third suction step S23.

In each of the multiple suction steps (the first suction step to the N-th suction step) included in the suction step S20, suction of drawing the slurry into the base material is performed by pressurizing or depressurizing the base material to which the catalyst metal-containing slurry has been supplied, in the direction of the other end which is opposite to the end (end surface) to which the slurry has been supplied, by using a suction device. One suction device is provided for each of the suction steps (i.e., N suction devices). The types of the suction devices for the multiple suction steps may be the same as or different from each other. As the suction devices, those which have been used in this kind of technology can be used without particular limitations.

The total suction time required for the multiple suction steps (the first suction step to the N-th suction step) included in the suction step S20 is not particularly limited, and may be, for example, the same as the suction time required for the known single suction device. Assume that the suction time required for the known single suction device is X seconds, the suction time required for each of the multiple suction steps may be, for example, X/N seconds, or different suction times may be set for the multiple suction steps so that the total suction time becomes X seconds. In view of reducing the rate-limiting in the production line and standby time of the shower nozzle, the suction times for the multiple suction steps are preferably the same (i.e., X/N seconds). The suction time for each of the multiple suction steps may be, for example, 1 second to 15 seconds, or 5 seconds to 7 seconds.

The conditions under which the base material is sucked may be changed, as appropriate, according to the kind and size of the base material, the shape and location of the catalyst coat layer formed, and the like, and may be the same as those under which the suction is performed by using the known single suction device. For example, when the suction is performed at a wind velocity of Y m/sec by the known single suction device, the wind velocity at which the suction is performed for each of the multiple suction steps may be Y m/sec. The wind velocities for the multiple suction steps may be different from each other as long as the required suction can be achieved. Although not particularly limited thereto, the wind velocity Y m/sec can be, for example, 20 m/sec to 80 m/sec, or 30 m/sec to 50 m/sec.

The number of suction steps included in the suction step S20 (i.e., a value of N in the N-th suction step) needs to be two or more, and the upper limit thereof is not particularly limited. In view of reducing costs, the number may be, for example 10 or less, preferably, 5 or less, 4 or less, or 3 or less.

The number of the suction steps is preferably set so that the time required for the shower nozzle to supply the catalyst metal-containing slurry to the honeycomb base material is longer than the standby time from the time the shower nozzle supplies the catalyst metal-containing slurry to the honeycomb base material to start of supply of the catalyst metal-containing slurry to another honeycomb base material by the shower nozzle. The standby time may be, for example, 4 seconds or less, preferably 3 seconds or less, more preferably 2 seconds or less. The number of suction steps may be set so that the rate-limiting stage of the production line is not in the suction step S20, but ins the slurry supply step S10 (i.e., the longest suction time among the suction times for the multiple suction steps is shorter than the standby time). As the standby time of the shower nozzle is shorter, it becomes more difficult to cause clogging of the outlet of the shower nozzle, which is preferable.

The slurry supply step S10 and the suction step S20 are performed on the same production line, and are performed in parallel. For example, while the base material Ais subjected to the slurry supply step, the base material B may be subjected to the first suction step S21, and further, the base material C may be subjected to the N-th suction step. As described above, in the method for producing the exhaust gas purification catalyst disclosed herein, multiple exhaust gas purification catalysts can be produced in parallel. The base materials A, B, and C are different base materials.

### <Drying Step S30>

The drying step S30 can be performed under the conditions similar to those which have been used in this kind of technology, and is not particularly limited. For example, the drying can be performed at a temperature of 50°C to 200°C for 1 minutes to 30 minutes.

### <Firing Step S40>

The firing step S40 can be performed under the conditions similar to those which have been used in this kind of technology, and is not particularly limited. For example, the firing can be performed at a temperature of 400°C to 1000°C for 30 seconds to 5 hours.

In the present embodiment shown in Fig. 3, the firing step S40 is performed after the drying step S30. However, for example, the slurry supply step S10 may be performed again after the drying step S30. This allows multiple catalyst coat layers to be formed. For example, the catalyst coat layer may be formed on each of the inlet cell side or the outlet cell side of the wall-flow type base material.

Some examples regarding the present technology will be described below. However, it is not intended that the present technology is limited to such specific examples.

### <Production Example>

First, as a base material, a wall-flow type, cylindrical honeycomb base material (made of cordierite, the number of cells: 47 cells per square cm (300 cpsi), the thickness of the partition: 0.2 mm (8 mil (1 mil/1000 inch), the average pore diameter: 15 µm) having a base material volumetric capacity of 1.314 L and a length in the cylinder axis direction of 122 mm was prepared. An alumina powder and ceria-zirconia power were added to and suspended in an aqueous palladium nitrate solution, thereby preparing a catalyst metal-containing slurry. A solution continuous discharge device including a shower nozzle at an outlet thereof was filled with the catalyst metal-containing slurry, and was set up so that the slurry is automatically discharged in the cycle shown in each Example described below. After 10 hours had elapsed since the automatic discharge of the slurry started, the slurry was supplied to the base material. The base material was used to produce an exhaust gas purification catalyst, and the catalyst coat layer state and the shower nozzle clogging state were evaluated.

The catalyst metal containing slurry discharge cycle and the suction conditions for the base material in each Example are described below.

### <Comparative Example 1>

In Comparative Example 1, the discharge cycle of the solution continuous discharge device was set based on a production line using a single suction device. Specifically, the time for which the slurry is supplied from the shower nozzle was set to 4 seconds (the same applies to the following Examples), the time for which the suction device performs suction was set to 6 seconds, and a cycle of the slurry discharge for 4 seconds and the standby time for 2 seconds (the time for which the slurry was not di scharged) was set to be repeated. After the solution continuous discharge device was operated for 10 hours in such a cycle, the catalyst metal-containing slurry exhausted from the shower nozzle is supplied to one end surface of the base material in the cylinder axis direction. Next, suction from the other end surface of the base material in the catalyst metal-containing slurry, to which the catalyst metal-containing slurry has not been supplied, was performed at a wind velocity of 50 m/sec for 6 seconds by using a commercially available suction device. Thereafter, after the base material after the suction was dried, the firing was performed, thereby obtaining an exhaust gas purification catalyst of Comparative Example 1.

### <Comparative Example 2>

The suction time in Comparative Example 1 was changed to 18 seconds. In other words, a production line was such that the standby time from the supply of the catalyst metal-containing slurry to a base material to the supply of the slurry to another base material was 14 seconds. Thus, the discharge cycle of the solution continuous discharge device was set such that a cycle of slurry discharge for 4 seconds and a standby time for 14 seconds was repeated. Other than this, an exhaust gas purification catalyst of Comparative Example 2 was obtained in the same manner as in Comparative Example 1.

### <Example 1>

In Example 1, the discharge cycle of the solution continuous discharge device was set based on a production line using three commercially available suction devices and sequentially performing the suctions of a base material by using the three suction devices. The suctions by the three suction devices are referred to as the "first suction", the "second suction", and the "third suction." The suction conditions for the three suction devices were all a wind velocity of 50 m/sec, and a suction time of 6 seconds. In other words, a production line was such that the standby time from the supply of the catalyst metal-containing slurry to a base material to the supply of the slurry to another base material was 2 seconds. Thus, the discharge cycle of the solution continuous discharge device was set such that a cycle of slurry discharge for 4 seconds and a standby time for 2 seconds was repeated. After the solution continuous discharge device was operated for 10 hours in such a cycle, the catalyst metal-containing slurry exhausted from the shower nozzle was supplied to one end surface of the base material in the cylinder axis direction. Next, suction from the other end surface of the base material in the cylinder axis direction, to which the catalyst metal-containing slurry has not been supplied, was performed for each of the first suction, second suction, and the third suction. Other than this, an exhaust gas purification catalyst of Example 1 was obtained in the same manner as in Comparative Example 1.

### <Example 2>

In Example 1, the suction conditions for the first suction were changed to the wind velocity of 40 m/sec and the suction time of 6 seconds, the suction conditions for the second suction were changed to the wind velocity of 50 m/sec and the suction time of 6 seconds, and the suction conditions for the third suction were changed to the wind velocity of 60 m/sec and the suction time of 6 seconds. The discharge cycle of the solution continuous discharge device was set to be the same as in Example 1. Other than this, an exhaust gas purification catalyst of Example 2 was obtained in the same manner as in Example 1.

### <Example 3>

In Example 1, the suction conditions for the first suction were changed to the wind velocity of 60 m/sec and the suction time of 6 seconds, the suction conditions for the second suction were changed to the wind velocity of 50 m/sec and the suction time of 6 seconds, and the suction conditions for the third suction were changed to the wind velocity of 40 m/sec and the suction time of 6 seconds. The discharge cycle of the solution continuous discharge device was set to be the same as in Example 1. Other than this, an exhaust gas purification catalyst of Example 3 was obtained in the same manner as in Example 1.

### <Example 4>

In Example 1, the suction conditions for the first suction were changed to the wind velocity of 50 m/sec and the suction time of 7 seconds, the suction conditions for the second suction were changed to the wind velocity of 50 m/sec and the suction time of 5 seconds, and the suction conditions for the third suction were changed to the wind velocity of 50 m/sec and the suction time of 6 seconds. With these changes, the discharge cycle of the solution continuous discharge device was set such that a cycle of slurry discharge for 4 seconds and a standby time for 3 seconds was repeated. Other than this, an exhaust gas purification catalyst of Example 4 was obtained in the same manner as in Example 1.

### <Example 5>

In Example 1, one more commercially available suction device was provided, and fourth suction was additionally performed. In Example 5, the suction conditions were the wind velocity of 50 m/sec and the suction time of 5 seconds for each of the first to fourth suctions. With these changes, the discharge cycle of the solution continuous discharge device was set such that a cycle of slurry discharge for 4 seconds and a standby time for 1 second was repeated. After the solution continuous discharge device was operated for 10 hours in such a cycle, the catalyst metal-containing slurry exhausted from the shower nozzle is supplied to one end surface of the base material in the cylinder axis direction. Next, suction from the other end surface of the base material in the cylinder axis direction, to which the catalyst metal-containing slurry has not been supplied, was performed for each of the first suction, second suction, the third suction, and the fourth suction. Other than this, an exhaust gas purification catalyst of Example 5 was obtained in the same manner as in Example 1.

### <Evaluation of Clogging of Shower Nozzle>

In each Example, the solution continuous discharge device was operated for 10 hours to supply the catalyst metal-containing slurry to the base material, and thereafter, a clogging percentage of the outlets of the shower nozzle was checked. Specifically, the clogging percentage [%] = (the number of outlets clogged)/(the total number of outlets) × 100 was used for calculation. The clogging percentage of less than 1% was evaluated as "∘" and of 1% or more was evaluated as "×". Table 1 shows the results.

### <Evaluation of Catalyst Coat Layer>

In the exhaust gas purification catalyst produced in each Example, whether the catalyst coat layer was formed on the entire partitions of the base material was checked. Specifically, a sample for measuring partitions of the exhaust gas purification catalyst by scanning electron microscope (SEM) was produced, the sample was embedded in resin, and the cross sections of the partitions were observed by a scanning electron microscope (available from Hitachi High-Tech Corporation, TM4000Plus). The case where the catalyst coat layer was formed on the entire cross sections of the partitions was evaluated as "∘" and the case where the catalyst coat layer was not formed on the entire cross sections of the partitions was evaluated as "×". Table 1 shows the results.

**[Table 1]**

| | First suction | | Second suction | | Third suction | | Fourth suction | | Evaluation | |
|---|---|---|---|---|---|---|---|---|---|---|
| | Time [sec.] | Wind velocity [m/sec.] | Time [sec.] | Wind velocity [m/sec.] | Time [sec.] | Wind velocity [m/sec.] | Time [sec.] | Wind velocity [m/sec.] | Clogging of shower nozzle | Catalyst coat layer |
| Comp. Ex. 1 | 6 | 50 | - | - | - | - | - | - | ○ | × |
| Comp. Ex. 2 | 18 | 50 | - | - | - | - | - | - | × | ○ |
| Ex. 1 | 6 | 50 | 6 | 50 | 6 | 50 | - | - | ○ | ○ |
| Ex. 2 | 6 | 40 | 6 | 50 | 6 | 60 | - | - | ○ | ○ |
| Ex. 3 | 6 | 60 | 6 | 50 | 6 | 40 | - | - | ○ | ○ |
| Ex. 4 | 7 | 50 | 5 | 50 | 6 | 50 | - | - | ○ | ○ |
| Ex.5 | 5 | 50 | 5 | 50 | 5 | 50 | 5 | 50 | ○ | ○ |

As can be seen from Table 1, in Examples 1 to 5 simulating a production line in which the catalyst metal-containing slurry was sucked multiple times, clogging of the shower nozzle was reduced. This was believed to be because the standby time of the shower nozzle was kept to a short period of less than 3 seconds, which allowed the supply of the catalyst metal-containing slurry to the next base material before the drying of the catalyst metal-containing slurry near the outlets of the shower nozzle. In Examples 1 to 5, the catalyst coat layer was formed on the entire cross sections of the partitions as in Comparative Example 2 in which suction was performed by a single suction device as has been done in the past. It was confirmed that in Examples 1 to 5, the catalyst coat layer was formed uniformly. This was believed to be because clogging of the shower nozzle was reduced, so that the supply of the catalyst metal-containing slurry from the shower nozzle was uniform. This demonstrated that suction of the catalyst metal-containing slurry could be sufficiently performed even when the suction step was divided into multiple steps.

In contrast, in Comparative Example 1, although clogging of shower nozzle was reduced, the catalyst coat layer was not formed on the entire cross sections of the partitions. This was considered to be because the suction time was short. In Comparative Example 2, the clogging percentage of the shower nozzle was high. This was considered to be because the standby time of the shower nozzle was 14 seconds, which was relatively long, so that the catalyst metal-containing slurry near the outlet of the shower nozzle was dried out.

## Claims

1. A method for producing multiple exhaust gas purification catalysts (1), the method comprising:
a slurry supply step (S10) of supplying a catalyst metal-containing slurry from a shower nozzle to one end of a honeycomb base material (10);
a first suction step (S21) of pressurizing or depressurizing the honeycomb base material (10) on which the slurry has been supplied, in a direction of the other end of the honeycomb base material (10) by using a first suction device to draw the slurry supplied, into the honeycomb base material (10);
a second suction step (S22) of further pressurizing or depressurizing the honeycomb base material (10) after the first suction step (S21), in the direction of the other end of the honeycomb base material (10) by using a second suction device to draw the slurry supplied, into the honeycomb base material (10); and
after the second suction step (S22), one or more suction steps (S23) of pressurizing or depressurizing the honeycomb base material (10) in the direction of the other end of the honeycomb base material (10) by using another suction device to draw the slurry supplied, into the honeycomb base material (10), wherein
the slurry supply step (S10) and the first and second suction steps (S21, S22) are performed in parallel in a same production line,
a time required for the shower nozzle to supply the catalyst metal-containing slurry to the honeycomb base material (10) is longer than a standby time from supply of the catalyst metal-containing slurry from the shower nozzle to the honeycomb base material (10) to start of supply of the catalyst metal-containing slurry to another honeycomb base material (10) by the shower nozzle, and
the standby time is 4 seconds or less.

2. The method according to claim 1, further comprising:
after the suction steps (S20), a drying step (S30) of drying the honeycomb base material (10).

3. The method according to claim 1 or 2, wherein
suction times in the respective suction steps (S20) are all the same.

4. The method according to any one of claims 1 to 3, wherein
the honeycomb base material (10) is a wall-flow type honeycomb base material.

5. The method according to any one of claims 1 to 4, wherein
the catalyst metal-containing slurry contains a catalyst metal functioning as a catalyst capable of oxidizing or reducing at least one exhaust gas component.

## Patentansprüche

1. Verfahren zum Produzieren mehrerer Abgasreinigungskatalysatoren (1), umfassend:
einen Schlämmezufuhrschritt (S10) zum Zuführen einer katalysatormetallhaltigen Schlämme von einer Brausedüse zu einem Ende eines Wabenbasismaterials (10);
einen ersten Ansaugschritt (S21) zum Beaufschlagen des Wabenbasismaterials (10), auf dem die Schlämme zugeführt worden ist, mit Druck oder Unterdruck in einer Richtung des anderen Endes des Wabenbasismaterials (10) unter Verwendung einer ersten Ansaugvorrichtung zum Saugen der zugeführten Schlämme in das Wabenbasismaterial (10);
einen zweiten Ansaugschritt (S22) zum weiteren Beaufschlagen des Wabenbasismaterials (10) mit Druck oder Unterdruck nach dem ersten Ansaugschritt (S21) in der Richtung des anderen Endes des Wabenbasismaterials (10) unter Verwendung einer zweiten Ansaugvorrichtung zum Saugen der zugeführten Schlämme in das Wabenbasismaterial (10); und
nach dem zweiten Ansaugschritt (S22) einen oder mehr Ansaugschritte (S23) zum Beaufschlagen des Wabenbasismaterials (10) mit Druck oder Unterdruck in der Richtung des anderen Endes des Wabenbasismaterials (10) unter Verwendung einer anderen Ansaugvorrichtung zum Saugen der zugeführten Schlämme in das Wabenbasismaterial (10), bei dem der Schlämmezufuhrschritt (S10) und der erste und der zweite Ansaugschritt (S21, S22) in einer selben Produktionslinie parallel durchgeführt werden,
eine Zeit, die dafür benötigt wird, dass die Brausedüse die katalysatormetallhaltige Schlämme dem Wabenbasismaterial (10) zuführt, länger als eine Bereitschaftszeit von einer Zufuhr der katalysatormetallhaltigen Schlämme von der Brausedüse zu dem Wabenbasismaterial (10) zu einem Beginn einer Zufuhr der katalysatormetallhaltigen Schlämme zu einem anderen Wabenbasismaterial (10) durch die Brausedüse ist, und
die Bereitschaftszeit 4 Sekunden oder weniger beträgt.

2. Verfahren nach Anspruch 1, ferner umfassend:
nach den Ansaugschritten (S20) einen Trocknungsschritt (S30) zum Trocknen des Wabenbasismaterials (10).

3. Verfahren nach Anspruch 1 oder 2, bei dem
Ansaugzeiten in den jeweiligen Ansaugschritten (S20) alle dieselben sind.

4. Verfahren nach einem der Ansprüche 1 bis 3, bei dem
das Wabenbasismaterial (10) ein Wandströmungswabenbasismaterial ist.

5. Verfahren nach einem der Ansprüche 1 bis 4, bei dem
die katalysatormetallhaltige Schlämme ein Katalysatormetall enthält, das als ein Katalysator funktioniert, der zum Oxidieren oder Reduzieren mindestens einer Abgaskomponente imstande ist.

## Revendications

1. Procédé de production de multiples catalyseurs de purification de gaz d'échappement (1),
le procédé comprenant :
une étape d'alimentation en suspension (S10) consistant à alimenter une suspension contenant un métal catalyseur à partir d'une buse de douche vers une extrémité d'un matériau de base en nid d'abeilles (10) ;
une première étape d'aspiration (S21) consistant à pressuriser ou dépressuriser le matériau de base en nid d'abeilles (10) sur lequel la boue a été fournie, dans une direction de l'autre extrémité du matériau de base en nid d'abeilles (10) en utilisant un premier dispositif d'aspiration pour aspirer la boue fournie dans le matériau de base en nid d'abeilles (10) ;
une deuxième étape d'aspiration (S22) consistant à pressuriser ou dépressuriser davantage le matériau de base en nid d'abeilles (10) après la première étape d'aspiration (S21), dans la direction de l'autre extrémité du matériau de base en nid d'abeilles (10) à l'aide d'un deuxième dispositif d'aspiration afin d'aspirer la boue fournie dans le matériau de base en nid d'abeilles (10) ; et
après la deuxième étape d'aspiration (S22), une ou plusieurs étapes d'aspiration (S23) consistant à pressuriser ou dépressuriser le matériau de base en nid d'abeilles (10) dans la direction de l'autre extrémité du matériau de base en nid d'abeilles (10) à l'aide d'un autre dispositif d'aspiration pour aspirer la boue fournie dans le matériau de base en nid d'abeilles (10), dans lequel
l'étape d'alimentation en suspension (S10) et les première et deuxième étapes d'aspiration (S21, S22) sont effectuées en parallèle sur une même ligne de production, le temps nécessaire à la buse de douche pour fournir la suspension contenant un métal catalyseur au matériau de base en nid d'abeilles (10) est plus long que le temps d'attente entre la fourniture de la suspension contenant un métal catalyseur par la buse de douche au matériau de base en nid d'abeilles (10) et le début de la fourniture de la suspension contenant un métal catalyseur à un autre matériau de base en nid d'abeilles (10) par la buse de douche, et
le temps d'attente est de 4 secondes ou moins.

2. Procédé selon la revendication 1, comprenant en outre :
après les étapes d'aspiration (S20), une étape de séchage (S30) consistant à sécher le matériau de base en nid d'abeilles (10).

3. Procédé selon la revendication 1 ou 2, dans lequel les temps d'aspiration dans les étapes d'aspiration respectives (S20) sont tous identiques.

4. Procédé selon l'une quelconque des revendications 1 à 3, dans lequel
le matériau de base en nid d'abeilles (10) est un matériau de base en nid d'abeilles de type à écoulement sur paroi.

5. Procédé selon l'une quelconque des revendications 1 à 4, dans lequel
la suspension contenant un métal catalyseur contient un métal catalyseur fonctionnant comme un catalyseur capable d'oxyder ou de réduire au moins un composant de gaz d'échappement.
